# EUROPÄISCHE PATENTSCHRIFT

(11) **EP 3 427 688 B1**
(45) Veröffentlichungstag und Bekanntmachung des Hinweises auf die Patenterteilung: **01.04.2020**
(21) Anmeldenummer: 18182566.2
(22) Anmeldetag: 10.07.2018
(51) Int. Cl.: A61C 1/12, A61C 1/18, A61C 1/06

(54) **ZAHNÄRZTLICHES HANDSTÜCK**
DENTAL HAND PIECE
PIÈCE À MAIN DENTAIRE

(30) Priorität: 10.07.2017 DE 102017211769
(43) Veröffentlichungstag der Anmeldung: 16.01.2019
(73) Patentinhaber: Sirona Dental Systems GmbH, 64625 Bensheim (DE)
(72) Erfinder: Ertugrul, Metin, 64295 Darmstadt (DE); Göbel, Stefan, 63225 Langen (DE)
(74) Vertreter: Özer, Alpdeniz

(56) Entgegenhaltungen:
- EP-A1- 0 282 752
- DE-A1- 19 801 535
- KR-B1- 101 518 739

## Beschreibung

Die Erfindung betrifft ein zahnärztliches Handstück, insbesondere ein Winkelstück, und insbesondere den Aufbau eines derartigen dentalen Instruments im Bereich eines Kupplungsendes mit einem Antrieb. Dentale Instrumente haben die Aufgabe, ein im Kopfbereich befestigtes Werkzeug mit hoher Drehzahl anzutreiben. Dabei entstehen durch die rotierenden Komponenten der dentalen Instrumente Schwingungen, welche über die Außenseite des dentalen Instruments abgestrahlt werden. Je nach Ausführungsform können diese Schwingungen verstärkt oder abgeschwächt werden.

### Stand der Technik

Es sind unterschiedliche Vorgehensweisen bekannt, die eine Reduzierung der Geräuschemissionen zum Ziel haben. So kann durch eine optimierte Lagerung der rotierenden Teile der Entstehung von Schwingungen entgegengewirkt werden. Auch die Erhöhung der Masse, insbesondere einer Außenhülse, kann die Schwingungsamplituden reduzieren und damit zu einer Geräuschreduktion führen.

Ein aus der EP 0 282 752 A1 bekanntes zahnärztliches Handstück weist ein Werkzeug auf, welches mit hoher Drehzahl mittels eines elektrischen Motors antreibbar ist. Das Handstück weist ein Gehäuse in Form einer Griffhülse mit einem Kupplungsbereich auf, in welchem ein Kupplungselement für den Antrieb und eine Halsbaugruppe und eine Kopfbaugruppe angeordnet sind, die untereinander zu einem Grundkörper starr verbunden sind, wobei die Griffhülse den Grundkörper radial umhüllt und an diesem über seine Gehäuseenden befestigt ist.

Zur Verringerung von Vibrationen und Laufgeräuschen sind mittig und an den beiden Enden jeweils ein elastisches Element zwischen einer Griffhülse und einem Grundkörper mit einem Kupplungselement angeordnet. Dabei ist ein innenliegendes Kupplungselement mit einer außenliegenden Hülse mithilfe eines Verbindungselementes lösbar verbunden. Dieses Verbindungselement verspannt die beiden Teile miteinander und sorgt damit für eine stabile Verbindung. Die Griffhülse stellt einen Resonanzkörper dar, welcher je nach Ausführungsform mehr oder weniger verspannt ist. Ist das Kupplungsstück vergleichsweise steif mit der Griffhülse verbunden, führt dies dazu, dass die Schwingungen und damit die Geräuschemissionen durch die Griffhülse verstärkt werden. Die Griffhülse kann daher gegenüber dem Grundkörper schwimmend gelagert sein, anstatt mittels eines Schraubrings unter Berührung mit dem Grundkörper starr verspannt zu sein. Mittels des als O-Ring ausgeführten elastischen Elements am rückwärtigen Bereich des Handstücks werden die Griffhülse und der Grundkörper in radialer Richtung auf Abstand gehalten. In axialer Richtung ist die Griffhülse gegenüber dem Grundkörper über das in etwa mittig angeordnete elastische Formteil schwimmend fixiert. Nachteilig bei dieser schwimmenden Lagerung ist, dass die mittige und endseitige Anordnung konstruktiv aufwendig ist.

Als alternative Ausführung ist offenbart, dass lediglich an den Enden der Griffhülse elastische Elemente vorgesehen sind, die jedoch keine eindeutige axiale Fixierung zwischen dem Grundkörper und der Griffhülse erlauben.

### Darstellung der Erfindung

Gemäß der Erfindung weist das zahnärztliche Handstück ein Gehäuse und einen Antriebsstrang mit einem Kupplungselement für einen Antrieb auf. Das Gehäuse umgibt den Antriebsstrang radial und weist ein erstes und ein zweites Gehäuseende auf und ist über das erste und das zweite Gehäuseende an dem Antriebsstrang gehalten. Zwischen dem ersten Gehäuseende und dem Kupplungselement ist ein in axialer Richtung rein federndes oder federndes und dämpfendes Entkoppelelement angeordnet, wohingegen das zweite Gehäuseende starr gegen den Antriebsstrang abgestützt ist. Das Gehäuse ist gegenüber dem Kupplungselement über das Entkoppelelement in axialer Richtung verspannt.

Das Handstück kann insbesondere ein Winkelstück sein. Das Handstück kann eine Werkzeugaufnahme für ein Werkzeug aufweisen, welches mit hoher Drehzahl antreibbar ist.

Bei diesem Handstück ist ein steifes Ankoppeln des Gehäuses mit dem Kupplungselement verhindert, wobei sich die Konstruktion insbesondere durch ihre Einfachheit und Wirksamkeit auszeichnet. Es hat sich herausgestellt, dass es ausreichend ist, wenn über den Kopf eingeleitete Schwingungen über ein nachgiebiges Entkoppelelement im Kupplungsbereich gedämpft werden und wenn die axiale Verspannung des Gehäuses, das auch als Außenhülse ausgeführt sein kann, gegenüber einer starren Lagerung reduziert wird.

Die Vorsehung einer nachgiebigen lösbaren Verbindung durch ein rein federndes Element oder ein federndes und dämpfendes Element zwischen dem Gehäuse und dem Kupplungselement in axialer Richtung statt einer steifen, lösbaren Verbindung erfordert nur einen geringen Bauraum und es sind nur wenige, zusätzliche Einzelteile erforderlich. Die Konstruktion ist im Aufbau einfach, in der Ausführung kostengünstig, im Betrieb robust und in der Wartung und Reparatur anwenderfreundlich bei gleichzeitig hoher Wirksamkeit.

Die niedrigsten Eigenfrequenzen des Gehäuses liegen dabei unterhalb der im Instrument entstandenen akustisch auffälligen Schwingfrequenzen, wodurch eine Amplitudenerhöhung durch Resonanz vermieden wird. Zudem wird durch eine nachgiebige Verbindung das Gehäuse nicht verspannt und dadurch das Schwingverhalten des Gehäuses positiv beeinflusst, da sich durch die veränderte Verbindung des Gehäuses bisherige Schwingungsformen nicht mehr auftreten.

Wird das Entkoppelelement als ein dämpfendes Teil ausgeführt, wie z.B. es ein O-Ring aus einem elastomeren Material darstellen würde, können Schwingungen in dem Gehäuse, die in anderen Bereichen des Instrumentes entstehen, wie z.B. dem Kopfbereich, und über eine harte Anbindung im Kopfbereich in das Gehäuse eingeleitet werden, zusätzlich gedämpft werden.

Vorteilhafterweise kann der Antriebsstrang eine Kopf-und Halsbaugruppe aufweisen, wobei die Kopfbaugruppe gegenüber dem Kupplungselement abgewinkelt sein und die Kopfbaugruppe eine Werkzeugachse aufweisen kann, die wiederum gegenüber der Kopfbaugruppe abgewinkelt sein kann, wobei das Kupplungselement über eine Bügelschraube fest mit der Kopfbaugruppe verbunden ist und diese über einen Anschlag starr gegen das Gehäuse abgestützt ist. Damit lässt sich ein Winkelstück bereitstellen.

Vorteilhafterweise kann das Entkoppelelement in axialer Richtung auf eine zur axialen Richtung insbesondere senkrecht stehende, zumindest aber geneigte Stützfläche angedrückt werden, um durch einen zumindest teilweisen Formschluss axiale Kräfte aufzunehmen.

Vorteilhafterweise kann das Gehäuse einen Stützring und das Kupplungselement einen Kupplungsdeckel aufweisen und kann das Entkoppelelement zwischen dem Stützring und dem Kupplungsdeckel angeordnet sein.

Durch eine derartige Anordnung können bestehende Bauteile wie das Gehäuse oder das Kupplungselement einfach ergänzt werden.

Vorteilhafterweise kann das Entkoppelelement im Werkstoffverbund mit einem Stützring zur Befestigung am Gehäuse und mit einem Kupplungsdeckel zur Befestigung am Kupplungselement ausgebildet sein. Dabei ist das Entkoppelelement zwischen dem Stützring und dem Kupplungsdeckel angeordnet. Mit einer derartigen Ausbildung entsteht ein einstückig handhabbares Bauteil.

### Kurzbeschreibung der Zeichnung

In der Zeichnung ist ein Ausführungsbeispiel der Erfindung dargestellt. Es zeigt:
- Fig. 1: einen Längsschnitt durch ein zahnärztliches Handstück;
- Fig. 2: ein Detail in einem Kupplungsbereich des Handstücks aus Fig. 1;
- Fig. 3: eine gegenüber Fig. 1 alternative Ausführung eines Handstücks mit einem Entkoppelelement in einem Werkstoffverbund;
- Fig. 4: eine Ausführung einer Aufnahme für das Entkoppelelement aus Fig. 1 im Detail;
- Fig. 5A-D: verschieden Ausführung von Aufnahmen für das Entkoppelelement aus Fig. 4 in einer Gegenüberstellung;
- Fig. 6: eine Ausführung mit einem Entkoppelelement, welches über einen Schraubring im Außengehäuse eingespannt ist,
- Fig. 7: eine Ausführung mit einem Entkoppelelement, welches über eine Mutter am Kupplungsdeckel eingespannt ist.

### Ausführungsbeispiel

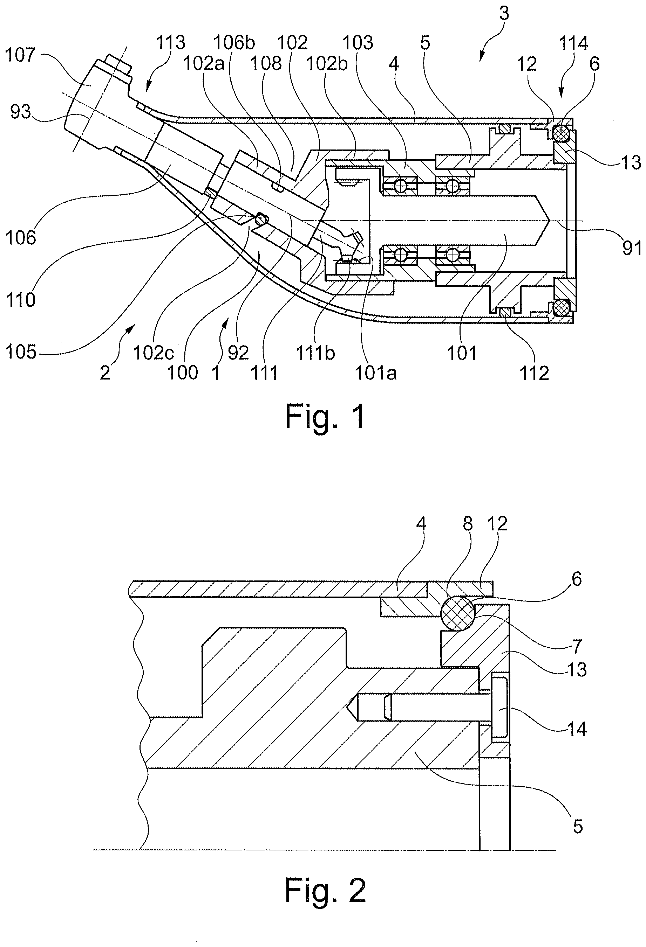

In Fig. 1 ist ein zahnärztliches Instrument 1 dargestellt, das als Handstück und insbesondere als Winkelstück ausgebildet ist. Das Handstück 1 weist einen Kopfbereich 2 mit einem rotierenden Werkzeug 20 und einen Kupplungsbereich 3 sowie ein als Außenhülse ausgebildetes Gehäuse 4 auf. Der Kupplungsbereich 3 erstreck sich typischerweise über eine Länge von ca. 30 % im Vergleich zur Gesamtlänge des Handstücks 1.

An einem im Kupplungsbereich 3 befindlichen ersten Gehäuseende ist ein Kupplungselement 5 zum Anschluss an einen nicht dargestellten Antrieb vorgesehen, welches über ein Entkoppelelement 6 gegenüber dem Gehäuse 4 abgestützt ist.

Wie in Fig. 2 im Detail dargestellt, ist das Entkoppelelement 6 zwischen einer ersten axialen Stützfläche 7 und einer zweiten axialen Stützfläche 8 angeordnet, wobei sich die erste axiale Stützfläche 7 an einem mit der Außenhülse verbundenen Stützring 12 und die zweite axiale Stützfläche 8 an einem Kupplungsdeckel 13 befindet. Der Kupplungsdeckel 13 ist über eine Befestigungsschraube 14 und weitere, über den Umfang verteilte, nicht dargestellte Schrauben an dem Kupplungselement 5 befestigt und drückt den Kupplungsdeckel 13 an das Kupplungselement 5. Dadurch wird das Entkoppelelement 6 mit der Stützfläche 7 am Kupplungsdeckel 13 auf die Stützfläche 8 des Stützrings 12 gedrückt. Der Stützring 12 ist dabei zentrisch mit geringem Spiel oder sogar mit einer leichten radialen Pressung in der Außenhülse 4 befestigt.

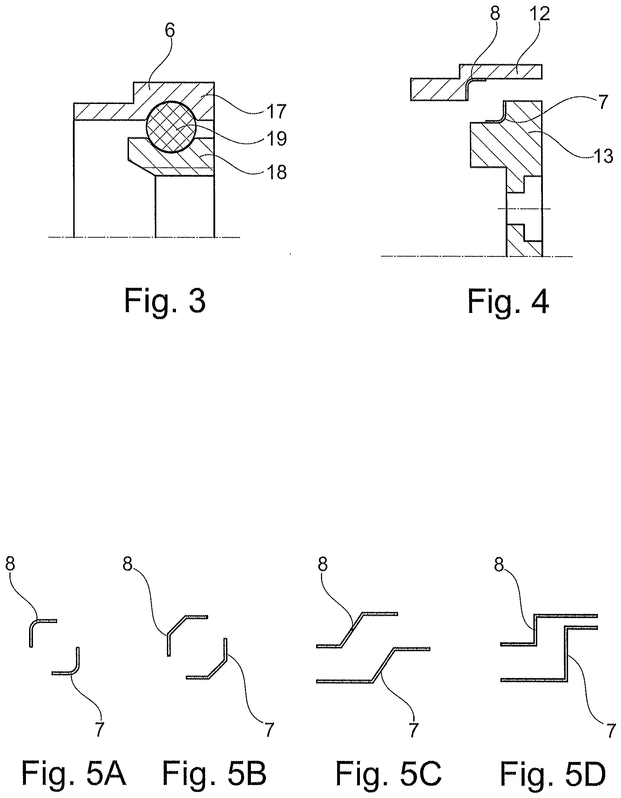

In Fig. 3 ist eine Ausführung eines Entkoppelelements 6 als Werkstoffverbund dargestellt, welcher aus einem Stützring 17, einem Kupplungsdeckel 18 und einem Feder-und Dämpfelement 19 besteht. Das Entkoppelelement 6 kann mit den beiden Einzelteilen Stützring 17 und Kupplungsdeckel 18 zusammen verspritzt werden. Diese beiden Einzelteile sind üblicherweise aus Stahl, können aber auch aus einem harten Kunststoff wie beispielsweise PEEK (Polyetheretherketon) sein.

Als Werkstoff für das Feder- und Dämpfelement 19 kommt beispielsweise ein FKM (Fluorkautschuk) in Betracht.

In Fig. 4 ist eine Ausführung einer Aufnahme für das Entkoppelelement aus Fig. 1 und 2 im Detail dargestellt und in Verbindung mit Fig. 5A-D werden verschiedene Ausführungen von Aufnahmen für das Entkoppelelement erläutert. Die Aufnahmen haben unterschiedliche Formen für die Stützflächen 7 und 8. So können die Stützflächen 7 und 8 verrundet sein, Fig. 5A, eine vertikale Fläche mit einer Fase sein, Fig. 5B, komplett als Fase, Fig. 5C oder komplett als rein axiale Fläche, Fig. 5D ausgeführt sein.

Das Entkoppelelement 6 kann aus einem Kunststoff oder einem metallischen Werkstoff ausgeführt sein. Wichtig ist dabei, dass es zumindest elastisch verformbare Eigenschaften aufweist. Vorteilhaft ist es, wenn das Entkoppelelement 6 eine elastisch-plastische Eigenschaft aufweist. Besonders vorteilhaft ist es, wenn das Entkoppelelement 6 zusätzlich federnde und dämpfende Eigenschaften aufweist.

Das Entkoppelelement 6 kann ein O-Ring aus einem thermisch und chemisch besonders sterilisationsbeständigen Werkstoff wie einem FKM (Fluorkautschuk) sein. Um eine möglichst starke Dämpfung zu erreichen, kann ein möglichst weicher Werkstoff eingesetzt werden. Übliche Shorehärten sind Shore 60, Shore 70 und Shore 80.

Wichtig hierbei ist, dass das Entkoppelelement 6 in axialer Richtung der Mittelachse auf eine vertikale Fläche oder zu mindestens zur Mittelachse geneigten Fläche angedrückt werden kann, um mehr als eine aus dem Stand der Technik bekannte rein radiale Anbringung eines O-Rings zu bewirken.

Darüber hinaus wird auf eine immer gleichbleibende Vorspannung des Entkoppelelements 6, beispielsweise einem O-Ring, O-Ringe geachtet.

Die Ausbildung eines Handstücks als Winkelstück wird anhand der Fig. 1 weiter erläutert. Ausgehend von einer ersten Achse 91, die der Achse einer Antriebswelle 101 oder einer Motorachse entspricht und auch als Mittelachse oder 0°-Achse bezeichnet wird, steht eine zweite Achse, beispielsweise einer Halswelle 111 in einem Winkel von 18° zur Mittelachse oder Motorachse 91. An diese 18°-Achse 92 schließt sich eine dritte Achse 93 an, die beispielsweise der Mittelachse einer Kopfwelle entspricht und die in einem Winkel von 90° zur Achse 92 der Halswelle 111 liegt.

Ein Antriebsstrang 100, also das Handstück ohne Gehäuse 4, umfasst auch eine Kopf- und Halsbaugruppe 107, 108. Die inneren Bauteile der Kopfbaugruppe 107 sind für die vorliegende Erfindung nicht von Bedeutung. Der Antriebsstrang 100 weist ein Knickelement 102 auf, das aus zwei Abschnitten gebildet ist, nämlich aus einem Knickelementabschnitt 102a auf der Seite der zweiten Achse 92 und aus einem Knickelementabschnitt 102b auf der Seite der ersten Achse 91. Das Knickelement 102 weist eine Aussparung 102c auf und ist auf der Seite der ersten Achse 91 mit einem Lagerflansch 103 verbunden. Über eine Bügelschraube 105 werden das Knickelement 102, der Lagerflansch 103 und ein Führungsrohr 106 miteinander verspannt. Dazu weist das Führungsrohr 106 eine Aussparung 106b für die Bügelschraube 105 auf und eine Aussparung 106a für einen Anschlagsring 110. Die Kopfbaugruppe wird entlang der Achse 92 mit dem Anschlagsring 110 am Knickelement 102 axial fixiert.

Der Anschlagsring 110 hat ausschließlich die Funktion, dass die Kopfbaugruppe 101 im Knickelement 102 auf der Achse 92 exakt positioniert ist.

Die Kopfbaugruppe 107 hat nur den Anschlagsring 110 als axiale Begrenzung. Damit ist gewährleistet, dass die Verzahnung 111b immer optimal im Eingriff ist mit der Verzahnung des Hohlrades 101a.

Im Führungsrohr 106 wird die Halswelle 111 mit einer Verzahnung 111b geführt, die mit einer Verzahnung 101a der im Lagerflansch 103 gelagerten Antriebswelle 101 zusammenwirkt.

Die Außenhülse 4 liegt über einen Anschlag 113 an der Kopfbaugruppe 107 starr an und ist über einen Anschlag 114 an der Kupplungsseite 3 in axialer Richtung rein federnd oder federnd und dämpfend gelagert. Dabei kann auch zusätzlich oder gleichzeitig im Kupplungsbereich 3 am Kupplungselement 5 ein elastischer radialer Abstandshalter 112 vorgesehen sein um zu verhindern, dass sich metallische Teile berühren.

Aus dem Kupplungselement 5 für einen Antrieb, der Halsbaugruppe 108 und der Kopfbaugruppe 107 wird durch deren starre Verbindung ein Grundkörper geschaffen, den das Gehäuse radial umgibt und an dem das Gehäuse über seine beiden Gehäuseenden befestigt ist. Wichtig ist hierbei, dass im Bereich des Kupplungselements 3 keine steifen Verbindungen zwischen der Außenhülse 4 und dem Kupplungselement 5 vorhanden sind.

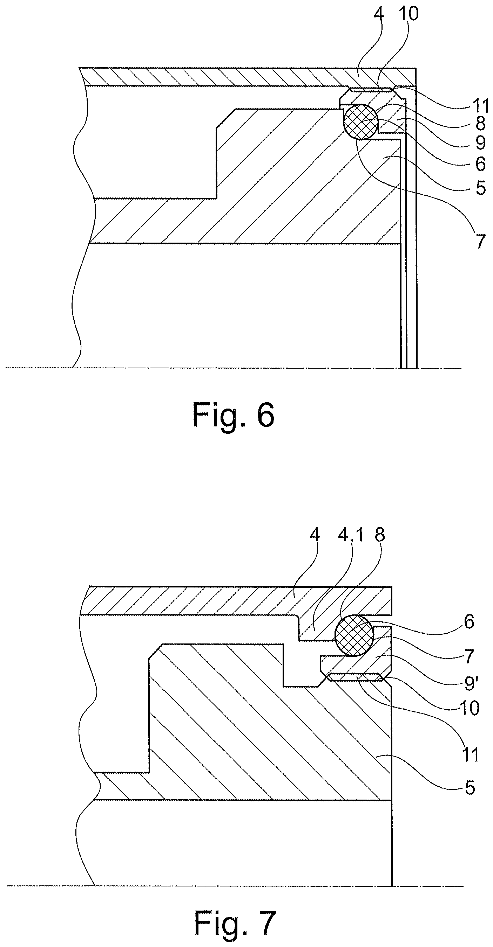

In einem Ausführungsbeispiel gemäß Fig. 6 wird das Entkoppelelement 6 durch einen Schraubring 9 mit einer Stützfläche 8 auf die Stützfläche 7 des Kupplungselements 5 gedrückt. Der Schraubring 9 wird über das Gewinde 11 und 10 an die Außenhülse 4 angezogen. Das Gewinde 10 ist direkt in der Außenhülse 4 angebracht und der Schraubring 9 hat in diesem Fall ein Außengewinde. Befestigungsschrauben können entfallen.

In einem Ausführungsbeispiel gemäß Fig. 7 wird das Entkoppelelement 6 durch eine Mutter 9' mit einer Stützfläche 7 auf eine Stützfläche 8 der Außenhülse 4 gedrückt. Die Mutter 9 wird über das Gewinde 11 und 10 an das Kupplungselement 5 angezogen. In die Außenhülse 4 ist ein Stützring 4.1 integriert, an dem die Stützfläche 8 angeordnet ist. Der Kupplungsdeckel 5 hat in diesem Fall ein Außengewinde 11.

Die Fig. 6 und 7 sind insbesondere bei dickwandigeren Hülsenkonstruktionen von Bedeutung.

## Patentansprüche

1. Zahnärztliches Handstück, aufweisend ein Gehäuse (4) und einen Antriebsstrang (100) mit einem Kupplungselement (5) für einen Antrieb, wobei das Gehäuse (4) den Antriebsstrang (100) radial umgibt und wobei das Gehäuse (4) ein erstes und ein zweites Gehäuseende aufweist und wobei das Gehäuse (4) am ersten und am zweiten Gehäuseende an dem Antriebsstrang (100) gehalten ist, **dadurch gekennzeichnet, dass** zwischen dem ersten Gehäuseende und dem Kupplungselement (5) ein in axialer Richtung rein federndes oder federndes und dämpfendes Entkoppelelement (6) angeordnet ist, wohingegen das zweite Gehäuseende starr gegen den Antriebsstrang (100) abgestützt ist und dass das Gehäuse (4) gegenüber dem Kupplungselement (5) über das Entkoppelelement in axialer Richtung verspannt ist.

2. Zahnärztliches Handstück nach Anspruch 1, **dadurch gekennzeichnet, dass** der Antriebsstrang (100) eine Kopf-und Halsbaugruppe (107, 108) aufweist, wobei die Kopfbaugruppe (107) gegenüber dem Kupplungselement (5) abgewinkelt ist und dass die Kopfbaugruppe (107) eine Werkzeugachse (93) aufweist, die wiederum gegenüber der Kopfbaugruppe (107) abgewinkelt ist, wobei das Kupplungselement (5) über eine Bügelschraube (105) fest mit der Kopfbaugruppe (107) verbunden ist und dass das Gehäuse (4) starr gegen einen Anschlag (113) der Kopfbaugruppe (107) abgestützt ist.

3. Zahnärztliches Handstück nach Anspruch 1 oder 2, **dadurch gekennzeichnet, dass** das Entkoppelelement (6) in axialer Richtung auf eine zur axialen Richtung insbesondere senkrecht stehende, zumindest aber geneigte Stützfläche (7, 8) angedrückt wird.

4. Zahnärztliches Handstück nach einem der Ansprüche 1 bis 3, **dadurch gekennzeichnet, dass** das Gehäuse (4) einen Stützring (4.1) und das Kupplungselement (5) einen Kupplungsdeckel (13) aufweist und dass das Entkoppelelement (6) zwischen dem Stützring (4.1) und dem Kupplungsdeckel (13) angeordnet ist.

5. Zahnärztliches Handstück nach einem der Ansprüche 1 bis 4, **dadurch gekennzeichnet, dass** das Entkoppelelement (6) im Werkstoffverbund mit einem Stützring (17) zur Befestigung am Gehäuse (4) und mit einem Kupplungsdeckel (18) zur Befestigung am Kupplungselement (5) ausgebildet ist und dass zwischen dem Stützring (17) und dem Kupplungsdeckel (13) ein Feder- und Dämpfelement (19) angeordnet ist.

## Claims

1. A dental handpiece comprising a housing (4) and a drive train (100) having a coupling element (5) for a drive, wherein the housing (4) radially surrounds the drive train (100) and wherein the housing (4) has a first and a second housing end and wherein the housing (4) is held on the drive train (100) at the first and second housing ends, **characterised in that** between the first housing end and the coupling element (5), a decoupling element (6) is arranged which is purely resilient or resilient and damping in an axial direction, whereas the second housing end is rigidly supported against the drive train (100), and **in that** the housing (4) is clamped, via the decoupling element, in the axial direction with respect to the coupling element (5).

2. The dental handpiece according to claim 1, **characterised in that** the drive train (100) has a head and neck assembly (107, 108), wherein the head assembly (107) is angled with respect to the coupling element (5) and **in that** the head assembly (107) has a tool axis (93), which in turn is angled with respect to the head assembly (107), wherein the coupling element (5) is fixedly connected to the head assembly (107) via a stirrup bolt (105) and **in that** the housing (4) is supported rigidly against a stop (113) of the head assembly (107).

3. The dental handpiece according to claim 1 or 2, **characterised in that** the decoupling element (6) is pressed in the axial direction onto a support surface (7, 8) which is in particular perpendicular, but at least inclined, with respect to the axial direction.

4. The dental handpiece according to one of claims 1 to 3, **characterised in that** the housing (4) comprises a support ring (4.1) and the coupling element (5) comprises a coupling cover (13), and **in that** the decoupling element (6) is arranged between the support ring (4.1) and the coupling cover (13).

5. The dental handpiece according to one of claims 1 to 4, **characterised in that** the decoupling element (6) is formed in the material composite having a support ring (17) for attachment to the housing (4) and having a coupling cover (18) for attachment to the coupling element (5) and **in that** a spring and damping element (19) is arranged between the support ring (17) and the coupling cover (13).

## Revendications

1. Pièce à main dentaire, comprenant un boîtier (4) et un train d'entraînement (100) avec un élément d'accouplement (5) pour un entraînement, le boîtier (4) entourant radialement le train d'entraînement (100) et le boîtier (4) présentant des première et seconde extrémités de boîtier et le boîtier (4) étant maintenu sur les première et seconde extrémités de boîtier sur le train d'entraînement (100), **caractérisée en ce qu'**entre la première extrémité de boîtier et l'élément d'accouplement (5), un élément de découplage (6) élastique et amortisseur ou purement élastique dans le sens axial est agencé, tandis que la seconde extrémité de boîtier est supportée rigidement contre le train d'entraînement (100) et **en ce que** le boîtier (4) est calé dans le sens axial par rapport à l'élément d'accouplement (5) via l'élément de découplage.

2. Pièce à main dentaire selon la revendication 1, **caractérisée en ce que** le train d'entraînement (100) présente un ensemble tête et col (107, 108), l'ensemble tête (107) étant incliné par rapport à l'élément d'accouplement (5) et **en ce que** l'ensemble tête (107) présente un axe d'outil (93), qui à son tour est incliné par rapport à l'ensemble tête (107), l'élément d'accouplement (5) étant relié de manière fixe à l'ensemble tête (107) via un étrier fileté (105) et **en ce que** le boîtier (4) est supporté rigidement contre une butée (113) de l'ensemble tête (107).

3. Pièce à main dentaire selon la revendication 1 ou 2, **caractérisée en ce que** l'élément de découplage (6) est pressé dans le sens axial sur une surface de support (7, 8) qui est notamment perpendiculaire, mais au moins inclinée par rapport au sens axial.

4. Pièce à main dentaire selon l'une quelconque des revendications 1 à 3, **caractérisée en ce que** le boîtier (4) présente une bague de support (4.1) et l'élément d'accouplement (5) un couvercle d'accouplement (13) et **en ce que** l'élément de découplage (6) est disposé entre la bague de support (4.1) et le couvercle d'accouplement (13).

5. Pièce à main dentaire selon l'une quelconque des revendications 1 à 4, **caractérisée en ce que** l'élément de découplage (6) est formé dans le matériau composite avec une bague de support (17) pour la fixation au boîtier (4) et avec un couvercle d'accouplement (18) pour la fixation à l'élément d'accouplement (5) et **en ce qu'**un élément élastique et amortisseur (19) est disposé entre la bague de support (17) et le couvercle d'accouplement (13).
